# EUROPÄISCHE PATENTSCHRIFT

(11) **EP 2 934 943 B1**
(45) Veröffentlichungstag und Bekanntmachung des Hinweises auf die Patenterteilung: **03.05.2017**
(21) Anmeldenummer: 13783857.9
(22) Anmeldetag: 30.10.2013
(51) Int. Cl.: B60N 2/44

(54) **SITZANLAGE FÜR EINEN KRAFTWAGEN**
SEAT ARRANGEMENT FOR A MOTOR VEHICLE
INSTALLATION DE SIÈGE POUR UNE VOITURE

(30) Priorität: 22.12.2012 DE 102012025306
(43) Veröffentlichungstag der Anmeldung: 28.10.2015
(73) Patentinhaber: Daimler AG, 70327 Stuttgart (DE)
(72) Erfinder: SCHMIDT, Bernd, 72218 Wildberg-Sulz (DE); WITZMANN, Marco, 71032 Böblingen (DE)
(74) Vertreter: JENSEN & SON
(86) Internationale Anmeldenummer: PCT/EP2013/003266
(87) Internationale Veröffentlichungsnummer: WO 2014/094932

(56) Entgegenhaltungen:
- DE-A1- 19 851 456
- DE-A1-102005 016 184
- DE-U1-202011 109 531

## Beschreibung

Die Erfindung betrifft eine Sitzanlage für einen Kraftwagen der im Oberbegriff des Patentanspruchs 1 angegebenen Art. Eine derartige Sitzanlage in Form eines Kraftfahrzeugsitzes ist aus DE 10 2005 016 184 A1 bekannt. Die Vorrichtung zum Befüllen und/oder Entlüften von aufblasbaren Kissen in einem Kraftfahrzeugsitz weist eine Pumpe und einen Druckspeicher auf, der über mindestens ein Magnetventil mit dem mindestens einen Kissen verbunden ist. Hierbei ist der Druckspeicher als flexibles, schlauchförmiges Zusatzvolumen ausgebildet, das die Pumpe mit dem mindestens einen Magnetventil verbindet.

Eine gattungsgemässe Sitzanlage in Form eines Fahrzeugsitzes bzw. Einzelsitzes ist aus der DE 10 2005 016 184 A1 bekannt und umfasst wenigstens ein Polster eines Rückenlehnenteils oder Sitzkissenteils, welches eine vorderseitig an der Polsterschicht des Polsters angeordnete Massageeinrichtung mit wenigstens einem Massagekissen, welches mit einem Druckspeicher fluidisch verbunden ist. Der Druckspeicher kann mittels einer Pumpeinrichtung, beispielsweise einer Pneumatikpumpe, mit Druckluft befüllt werden. Danach steht eine entsprechende Menge an Druckluft zum Betreiben der Masseeinrichtung zur Verfügung, solange bis das Druckniveau im Druckspeicher auf ein zu niedriges Niveau gesunken ist, um die Massageeinrichtung mit Druckluft zu versorgen.

Solche Massageeinrichtungen mit einem oder mehreren Massagekissen sind üblicherweise zwischen dem jeweiligen Sitzbezug und einer Polsterschicht des Polsters angeordnet. Zur Ausführung der Massagefunktion wird die Massageeinrichtung über ein Schaltventil und eine Verbindung mit einer Druckversorgung, beispielsweise dem Druckspeicher, mit Luft befüllt und wieder entleert. Die Polsterschicht ist aus Komfortgründen für gewöhnlich möglichst weich und elastisch ausgeführt. Für die Massagefunktion stützt sich die Massageeinrichtung auf der Polsterschicht ab und drückt gegen den Insassen. Um diese Funktion möglichst effektiv zu gestalten, sollte die Polsterschicht für diesen Fall möglichst hart sein, um einen guten Gegenhalt für die Massageeinrichtung zu bieten. Dies steht im Widerspruch dazu, eine möglichst komfortable Polsterschicht bereitzustellen.

Es ist die Aufgabe der vorliegenden Erfindung, eine Sitzanlage der eingangs genannten Art bereitzustellen, mittels welcher ein hoher Sitzkomfort bei einer gleichzeitig guten Abstützfunktion für eine Massageeinrichtung ermöglicht wird.

Diese Aufgabe wird durch eine Sitzanlage mit den Merkmalen des Patentanspruchs 1 gelöst. Vorteilhafte Ausgestaltungen mit zweckmäßigen und nicht-trivialen Weiterbildungen der Erfindung sind in den abhängigen Ansprüchen angegeben.

Um ein möglichst komfortables Sitzen zu ermöglichen und dabei gleichzeitig einen guten Gegenhalt für eine Massageeinrichtung bereitzustellen, ist es bei der erfindungsgemäßen Sitzanlage vorgesehen, dass der Druckspeicher zwischen der Massageeinrichtung und der Polsterschicht angeordnet ist. Der Druckspeicher ist dabei erfindungsgemäß als eine Art befüllbare Matte ausgebildet und zwischen der Massageeinrichtung und der Polsterschicht angeordnet. Der Druckspeicher kann vorzugsweise als eine Art "Mini-Luftmatratze" ausgebildet sein, welche bei einer aktivierten Massagefunktion als Druckspeicher dient und bei ausgeschalteter Massagefunktion im Wesentlichen vollständig entleert sein kann. Somit wird mittels der erfindungsgemäßen Sitzanlage durch den Druckspeicher ein Puffervolumen quasi bauraumneutral in der Sitzanlage integriert, wobei zusätzlich die Funktion erfüllt wird, dass oberhalb der Polsterschicht eine Art verhärtete Schicht durch den aufgeblasenen Druckspeicher ausgebildet werden kann, welcher einen guten Gegenhalt für die Massageeinrichtung ausbildet. Bei einer deaktivierten Massagefunktion sind für auf der Sitzanlage Platz nehmende Fahrzeuginsassen hingegen keinerlei Komfortbeeinträchtigungen vorhanden, da der Druckspeicher für diesen Fall vollständig entleert sein kann, so dass der Sitzkomfort im Wesentlichen durch die Polsterschicht bestimmt wird.

In vorteilhafter Ausgestaltung der Erfindung ist es vorgesehen, dass der Druckspeicher aus zwei Folien ausgebildet ist, zwischen welchen ein Hohlraum zum Aufnehmen eines Druckmediums ausbildbar ist. Dadurch kann bei eingeschalteter Massagefunktion der Druckspeicher auf einfache Weise aufgeblasen und somit auch verhärtet werden, so dass die Abstützwirkung für die Massageeinrichtung, insbesondere für das wenigstens eine Massagekissen, bereitgestellt werden kann. Sobald die Massagefunktion deaktiviert wird, kann das Druckmedium aus dem Druckspeicher ausgelassen werden, so dass der Druckspeicher quasi bauraumneutral innerhalb der Sitzanlage untergebracht sein kann.

Eine weitere vorteilhafte Ausführungsform der Erfindung sieht vor, dass die Massageeinrichtung und der Druckspeicher parallel zu einer Pumpeinrichtung geschaltet sind, mittels welcher die Massageeinrichtung und/oder der Druckspeicher mit dem Druckmedium befüllbar sind. Durch die Zwischenschaltung des Druckspeichers können die Häufigkeit der Einschalt- bzw. Ausschaltvorgänge und unter Umständen auch die Betriebszeiten der Pumpeinrichtung erheblich verringert werden, da der Druckspeicher als Zwischenspeicher eingesetzt werden kann, sobald dieser mittels der Pumpeinrichtung mit dem Druckmedium befüllt worden ist. Eine Versorgung der Massageeinrichtung, insbesondere der Massagekissen, mit dem Druckmedium aus dem befüllten Druckspeicher kann so lange erfolgen, bis dieser ein zu niedriges Druckniveau aufweist. Erst dann muss der Druckspeicher wieder mittels der Pumpeinrichtung mit dem Druckmedium befüllt werden. Folglich muss die Pumpe also nicht fortlaufend während der Massagefunktion betrieben werden, wodurch die Lebensdauer der Pumpeinrichtung erheblich erhöht werden kann. Zudem wird durch die Parallelschaltung des Druckspeichers und der Massageeinrichtung ermöglicht, dass, sobald die Massagefunktion aktiviert wird, sowohl die Massageeinrichtung als auch der Druckspeicher unmittelbar mit dem Druckmedium beaufschlagt werden können. Somit kann die Massagefunktion im Wesentlichen verzögerungsfrei aktiviert werden.

Gemäß einer weiteren vorteilhaften Ausführungsform der Erfindung ist es vorgesehen, dass die Sitzanlage zumindest ein Stützkissen aufweist, welches unmittelbar mittels der Pumpeinrichtung mit dem Druckmedium befüllbar ist. Bei dem Stützkissen kann es sich beispielsweise um ein aufblasbares Kissen im Seitenwangenbereich des Rückenlehnenteils der Sitzanlage und/oder um eine Lordosenstütze handeln, welche unmittelbar mittels der Pumpeinrichtung mit dem Druckmedium befüllbar ist. Somit ist kein Umweg über den Druckspeicher bei der Befüllung des zumindest einen Stützkissens der Sitzanlage erforderlich, wodurch dies besonders schnell erfolgen kann.

In weiterer vorteilhafter Ausgestaltung der Erfindung ist es vorgesehen, dass die Nachgiebigkeit des Druckspeichers durch einen vorgebbaren Befüllgrad mit dem Druckmedium und/oder vorgebbaren Druck einstellbar ist. Mit anderen Worten kann zusätzlich zur Verstärkungswirkung der Massagefunktion die Härte der Sitzanlage, sei es im Bereich des Rückenlehnenteils und/oder des Sitzkissenteils, individuell in der Härte verstellt werden. Dadurch kann die Härte der Sitzanlage individuell durch ein stärkeres oder schwächeres Befüllen des Druckspeichers mit dem Druckmedium eingestellt werden.

In weiterer vorteilhafter Ausgestaltung der Erfindung ist es vorgesehen, dass die Pumpeinrichtung innerhalb der Sitzanlage angeordnet ist. Dadurch müssen nicht auf aufwändige Weise Druckluftleitungen oder andere Leitungen zur Führung des Druckmediums über weite Strecken innerhalb des Fahrzeugs verlegt werden, da durch die Integration der Pumpeinrichtung innerhalb der Sitzanlage besonders kurze Wege für die Leitungen gegeben sind. Zudem kann eine solche Sitzanlage auch auf besonders einfache Weise nachgerüstet bzw. ausgetauscht werden, da im Wesentlichen alle für die Funktionen der Sitzanlage notwendigen Komponenten in der Sitzanlage selbst integriert sind.

Schließlich ist es in weiterer vorteilhafter Ausgestaltung der Erfindung vorgesehen, dass die Sitzanlage zwei der Polster umfasst, wobei eines der Polster dem Rückenlehnenteil und das andere Polster dem Sitzkissenteil der Sitzanlage zugeordnet ist. Mit anderen Worten weist die Sitzanlage sowohl im Rückenlehnenteil als auch im Sitzkissenteil eine erfindungsgemäße Anordnung einer Massageeinrichtung und eines Druckspeichers auf.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1: eine schematische Seitenansicht einer Sitzanlage für einen Kraftwagen in Form eines Fahrzeugsitzes bzw. Einzelsitzes, wobei ein Polster eines Rückenlehnenteils eine Massageeinrichtung umfasst, welche vorderseitig einer Polsterschicht des Polsters angeordnet und mit einem Druckspeicher fluidisch verbunden ist, welcher zwischen der Massageeinrichtung und der Polsterschicht angeordnet ist;
- Fig. 2: ein schematisches Schaltbild, in welchem die fluidische Verschaltung der Massageeinrichtung und des Druckspeichers sowie eine diese mit einem Druckmedium versorgende Pneumatikpumpe dargestellt ist; und
- Fig. 3: ein schematisches Schaltbild, in welchem eine alternative Verschaltung des Druckspeichers, der Massageeinrichtung und der Pneumatikpumpe dargestellt ist.

In den Figuren werden gleiche oder funktionsgleiche Elemente mit gleichen Bezugszeichen versehen.

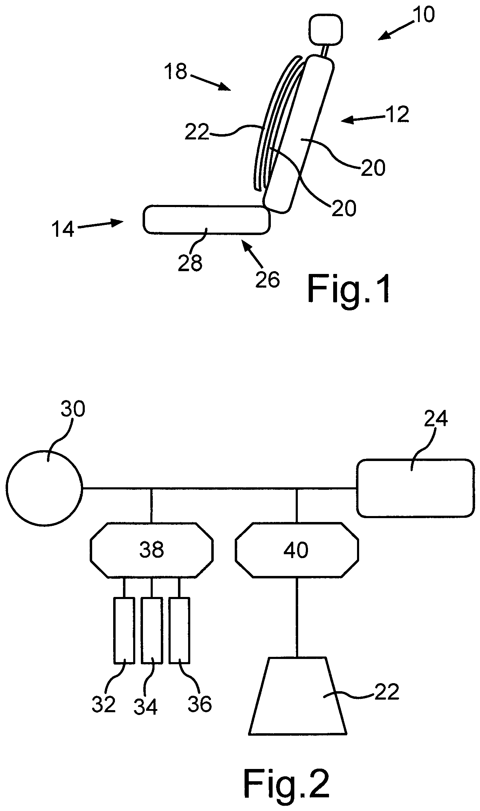

Eine im Ganzen mit 10 bezeichnete Sitzanlage für einen Kraftwagen ist in einer schematischen Seitenansicht in Fig. 1 gezeigt. Die Sitzanlage 10 kann - wie vorliegend gezeigt - ein einzelner Vordersitz in Form eines Fahrer- oder Beifahrersitzes sein. Alternativ kann es sich bei der Sitzanlage 10 entgegen der hier gezeigten Ausführungsform auch um einen einzelnen Rücksitz oder auch um eine Rücksitzbank handeln.

Die Sitzanlage 10 weist ein Rückenlehnenteil 12 und ein Sitzkissenteil 14 sowie ein Kopfteil 16 auf, wobei die Sitzanlage 10 ein Polster 18 des Rückenlehnenteils 12 umfasst, welches eine vorderseitig einer Polsterschicht 20 des Polsters 18 angeordnete Massageeinrichtung 22 mit mehreren hier nicht dargestellten Massagekissen aufweist. Die Massageeinrichtung 22 bzw. die einzelnen Massagekissen sind mit einem Druckspeicher 24 fluidisch verbunden, welcher zwischen der Massageeinrichtung 22 und der Polsterschicht 20 angeordnet ist. Unter dem Polster 18 sind also im Wesentlichen sämtliche Elemente des Rückenlehnenteils 12 zu verstehen, welche nicht einem hier nicht dargestellten Sitzgestell bzw. -rahmen zuzuordnen sind und zumindest anteilig eine polsternde Wirkung ausüben.

Ein Polster 26 des Sitzkissenteils 14 kann ebenfalls eine vorderseitig einer Polsterschicht 28 angeordnete, hier nicht dargestellte Massageeinrichtung mit ebenfalls wenigstens einen Massagekissen umfassen, welches ebenfalls mit einem hier nicht dargestellten Druckspeicher fluidisch verbunden sein kann, wobei der hier nicht dargestellte Druckspeicher ebenfalls zwischen der Massageeinrichtung und der Polsterschicht des dem Sitzkissenteil 14 zugeordneten Polsters 26 angeordnet sein kann. Mit anderen Worten kann die Sitzanlage 10 entgegen der hier gezeigten Darstellung zusätzlich auch eine weitere Massageeinrichtung aufweisen, welche dem Sitzkissenteil 14 zugeordnet ist. Analog sind unter dem Polster 26 sind also im Wesentlichen sämtliche Elemente des Sitzkissenteils 14 zu verstehen, welche nicht einem hier nicht dargestellten Sitzgestell bzw. -rahmen zuzuordnen sind und zumindest anteilig eine polsternde Wirkung ausüben.

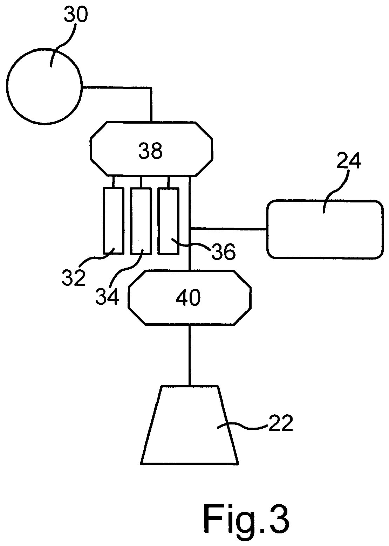

Der Druckspeicher 24 ist vorliegend aus zwei nicht näher bezeichneten Folien ausgebildet, zwischen welchen ein hier nicht dargestellter Hohlraum zum Aufnehmen eines Druckmediums, im vorliegenden Fall Luft, ausbildbar ist. Der Druckspeicher ist also als eine Art kleiner Luftmatratze ausgebildet, welche mit der Druckluft befüllt und dadurch aufgeblasen werden kann, wobei nach dem Auslassen der Druckluft das Volumen des Druckspeichers 24 wieder verringert wird. Eine Verschaltung der Massageeinrichtung 22 und des Druckspeichers 24 wird nachfolgend anhand der schematischen Schaltpläne der Fig. 2 bzw. 3 näher erläutert.

In Fig. 2 ist eine Möglichkeit der Verschaltung des Druckspeichers 24, der Massageeinrichtung 22 und einer als Pumpeinrichtung dienenden Pneumatikpumpe 26 gezeigt, mittels welcher sowohl der Druckspeicher 24 als auch die Massageeinrichtung 22 bzw. deren Massagekissen, mit einem Druckmedium, beispielsweise Luft, beaufschlagbar sind. Im vorliegenden Fall ist das Massagekissen bzw. die Massageeinrichtung 22 und der Druckspeicher 24 parallel zu der Pneumatikpumpe 30 geschaltet, mittels welcher die Massageeinrichtung 22 und/oder der Druckspeicher 24 mit dem Druckmedium befüllbar sind. Des Weiteren sind drei einzelne Stützkissen 32 bis 36 dargestellt, wobei es sich bei dem Stützkissen 32 vorliegend um ein den Seitenhalt der Sitzanlage 10 verstärkendes Lehnenkissen und bei den Stützkissen 34, 36 um jeweilige Lordosenstützen handelt. Die Sitzanlage 10 umfasst also eine Mehrzahl von Stützkissen 32 bis 36, welche unmittelbar mittels der Pneumatikpumpe 30 mit dem Druckmedium befüllbar sind.

Sowohl den Stützkissen 32 bis 36 als auch der Massageeinheit 22 sind jeweilige Schaltventile 38, 40 vorgeschaltet, mittels welchen die Druckluftzufuhr aus der Pneumatikpumpe 30 regelbar ist.

Beim Einschalten einer Massagefunktion ist es beispielsweise möglich, dass das Schaltventil 40 unmittelbar dann geöffnet wird, wenn die Pneumatikpumpe 30 angeschaltet wird, so dass der Druckspeicher 24 und die Massageeinheit 22 gleichzeitig mit Druckluft beaufschlagt werden. Alternativ ist es auch möglich, dass beim Einschalten der Pneumatikpumpe 30 zunächst das Schaltventil 40 derart geschaltet bzw. verschlossen wird, dass der Massageeinheit 22 so lange keine Druckluft zugeführt wird, bis der Druckspeicher 24 mit einer vorgegebenen Menge bzw. mit einem entsprechend vorgegebenen Druck befüllt worden ist. Anschließend kann die Pneumatikpumpe 30 ausgeschaltet werden, wobei zur Erzielung der Massagefunktion mittels des Schaltventils 40 die Druckluftzufuhr aus dem Druckspeicher 24 zu der Massageeinheit 22, bzw. entsprechenden Massagekissen der Massageeinheit 22, zugeführt wird.

Über das Schaltventil 40 kann auch die der Massageeinheit 22 bzw. deren Massagekissen zugeführte Druckluft wieder über einen hier nicht dargestellten Druckluftkreislauf abgeführt werden. Dadurch wird ein fortwährendes Aufpumpen und Entlüften der Massageeinheit 22 bzw. von deren Massagekissen durch Speisung aus dem Druckspeicher 24 ermöglicht. Infolgedessen muss die Pneumatikpumpe 30 während des Betriebs der Massagefunktion nicht fortlaufend angeschaltet sein, was die Lebensdauer der Pneumatikpumpe 30 erheblich verbessern kann.

Die Stützkissen 32 bis 36 können unabhängig von der Massagefunktion der Sitzanlage 10 direkt mittels der Pneumatikpumpe 30 mit Druckluft beaufschlagt werden, so dass beispielsweise ein entsprechender Seitenhalt der Sitzanlage 10 und/oder eine entsprechende Stützwirkung für die Lordose eines Fahrzeuginsassens eingestellt werden kann.

Die als Pumpeinrichtung dienende Pneumatikpumpe 30 kann innerhalb der Sitzanlage 10 angeordnet sein. Ferner ist es möglich, die Nachgiebigkeit bzw. die Härte des Druckspeichers 24 durch einen vorgebbaren Befüllgrad mit dem Druckmedium und/oder einem vorgebbaren Druck individuell einstellen zu können. Es ist also möglich, auch bei ausgeschalteter Massagefunktion den Druckspeicher 24 derart mit dem Druckmedium zu beaufschlagen bzw. zu befüllen, dass der mattenförmig ausgebildete Druckspeicher 24 einen gewissen Füllgrad und somit eine gewisse Härte bzw. eine gewisse Nachgiebigkeit aufweist.

In Fig. 3 ist eine alternative Verschaltung der Pneumatikpumpe 30, der Stützkissen 32 bis 36, der Massageeinheit 22 und des Druckspeichers 24 dargestellt. Vorliegend sind die Schaltventile 38, 40 nicht parallel, sondern in Reihe geschaltet, wobei der Druckspeicher 24 zwischen den Schaltventilen 38, 40 angeordnet ist. Eine Befüllung des Druckspeichers 24 kann im vorliegenden Fall über eine entsprechende Schaltung bzw. einen entsprechenden Schaltzustand des Schaltventils 38 eingestellt werden. Beim Einschalten der Pneumatikpumpe 30 ist es also im Gegensatz zu der in Fig. 2 dargestellten Verschaltung nicht zwangsläufig gegeben, dass der Druckspeicher 24 direkt mit dem Druckmedium beaufschlagt wird. Erst durch eine entsprechende Einstellung des Schaltventils 38 wird bei aktivierter Pneumatikpumpe 30 auch eine Befüllung des Druckspeichers 24 ermöglicht.

Dadurch, dass der Druckspeicher 24 zwischen der Massageeinheit 22 und der Polsterschicht 20 angeordnet ist, kann sich während des Betriebs der Massagefunktion die Massageeinheit 22 an dem aufgepumpten Druckspeicher 24 abstützen, wodurch eine verbesserte Massagefunktion erzielt wird. Mit anderen Worten wird durch die entsprechende Anordnung des Druckspeichers 24 verhindert, dass sich beim Einschalten bzw. beim Betrieb einer Massefunktion die Massageeinheit 22 zu stark in die Polsterschicht 20 eindrückt, wodurch der Massageeffekt reduziert werden würde. Bei ausgeschalteter Massagefunktion kann der Druckspeicher 24 wahlweise vollständig entleert werden, so dass ein besonders komfortables Sitzen aufgrund der weichen Polsterschicht 20 ermöglicht wird.

## Patentansprüche

1. Sitzanlage (10) für einen Kraftwagen, mit wenigstens einem Polster (18, 26) eines Rückenlehnenteils (12) oder Sitzkissenteils (14), welches eine vorderseitig einer Polsterschicht (20, 28) des Polsters (18, 26) angeordnete Massageeinrichtung (22) mit wenigstens einem Massagekissen umfasst, welches mit einem Druckspeicher (24) fluidisch verbundenen ist,
**dadurch gekennzeichnet, dass**
der Druckspeicher (24) als eine Art befüllbare Matte ausgebildet und zwischen der Massageeinrichtung (22) und der Polsterschicht (20, 28) angeordnet ist.

2. Sitzanlage (10) nach Anspruch 1,
**dadurch gekennzeichnet, dass**
der Druckspeicher (24) aus zwei Folien ausgebildet ist, zwischen welchen ein Hohlraum zum Aufnehmen eines Druckmediums ausbildbar ist.

3. Sitzanlage (10) nach Anspruch 1 oder 2,
**dadurch gekennzeichnet, dass**
die Massageeinrichtung (22) und der Druckspeicher (24) parallel zu einer Pumpeinrichtung (30) geschaltet sind, mittels welcher die Massageeinrichtung (22) und/oder der Druckspeicher (24) mit dem Druckmedium befüllbar sind.

4. Sitzanlage (10) nach Anspruch 3, **dadurch gekennzeichnet, dass** die Sitzanlage (10) zumindest ein Stützkissen (32, 34, 36) aufweist, welches unmittelbar mittels der Pumpeinrichtung (30) mit dem Druckmedium befüllbar ist.

5. Sitzanlage (10) nach einem der vorhergehenden Ansprüche,
**dadurch gekennzeichnet, dass**
die Nachgiebigkeit des Druckspeichers (24) durch einen vorgebbaren Befüllgrad mit dem Druckmedium und/oder vorgebbaren Druck einstellbar ist.

6. Sitzanlage (10) nach einem der Ansprüche 3 oder 4,
**dadurch gekennzeichnet, dass**
die Pumpeinrichtung (30) innerhalb der Sitzanlage (10) angeordnet ist.

7. Sitzanlage (10) nach einem der vorhergehenden Ansprüche,
**dadurch gekennzeichnet, dass**
die Sitzanlage (10) zwei der Polster (18, 26) umfasst, wobei eines der Polster (18) dem Rückenlehnenteil (12) und das andere Polster (26) dem Sitzkissenteil (14) der Sitzanlage (10) zugeordnet ist.

## Claims

1. Seat system (10) for a motor vehicle, comprising at least one cushion (18, 26) of a backrest part (12) or a seat cushion part (14), the system comprising at least one massage device (22) arranged in front of a cushion layer (20, 28) of the cushion (18, 26) and having at least one massage cushion fluidically connected to a pressure accumulator (24),
**characterised in that**
the pressure accumulator (24) is designed as a type of fillable mat and located between the massage device (22) and the cushion layer (20, 28).

2. Seat system (10) according to claim 1,
**characterised in that**
the pressure accumulator (24) is formed from two foils between which a cavity for the accommodation of a pressure medium can be formed.

3. Seat system (10) according to claim 1 or 2,
**characterised in that**
the massage device (22) and the pressure accumulator (24) are connected in parallel with a pumping device (30), by means of which the massage device (22) and/or the pressure accumulator (24) can be filled with the pressure medium.

4. Seat system (10) according to claim 3,
**characterised in that**
the seat system (10) comprises at least one supporting cushion (32, 34, 36), which can be directly filled with the pressure medium by means of the pumping device (30).

5. Seat system (10) according to any of the preceding claims,
**characterised in that**
the flexibility of the pressure accumulator (24) can be adjusted by means of a presettable pressure medium filling level and/or a presettable pressure.

6. Seat system (10) according to claim 3 or 4,
**characterised in that**
the pumping device (30) is located within the seat system (10).

7. Seat system (10) according to any of the preceding claims,
**characterised in that**
the seat system (10) comprises two of the cushions (18, 26), one of the cushions (18) being assigned to the backrest part (12) and the other cushion (26) being assigned to the seat cushion part (14) of the seat system (10).

## Revendications

1. Installation de siège (10) pour un véhicule automobile, comprenant au moins un rembourrage (18, 26) d'une partie de dossier (12) ou d'une partie (14) de coussin de siège, qui comprenant un dispositif de massage (22) disposé côté avant d'une couche de rembourrage (20, 28) du rembourrage (18, 26) avec au moins un coussin de massage, qui est en communication fluidique avec un accumulateur de pression (24), **caractérisée en ce que** l'accumulateur de pression (24) est conçu comme un type de matelas pouvant être rempli et disposé entre le dispositif de massage (22) et la couche de rembourrage (20, 28).

2. Installation de siège (10) selon la revendication 1, **caractérisée en ce que** l'accumulateur de pression (24) est conçu à partir de deux feuilles, entre lesquelles peut se former un espace creux destiné à recevoir un agent de pressurisation.

3. Installation de siège (10) selon la revendication 1 ou 2, **caractérisée en ce que** le dispositif de massage (22) et l'accumulateur de pression (24) sont commutés en parallèle avec un dispositif de pompe (30) au moyen duquel le dispositif de massage (22) et/ou l'accumulateur de pression (24) peut/peuvent être rempli(s) d'agent de pressurisation.

4. Installation de siège (10) selon la revendication 3, **caractérisée en ce que** l'installation de siège (10) présente un coussin de soutien (32, 34, 36) qui peut être rempli d'agent de pressurisation directement au moyen d'un dispositif de pompe (30).

5. Installation de siège (10) selon l'une quelconque des revendications précédentes, **caractérisée en ce que** la souplesse de l'accumulateur de pression (24) peut être ajustée selon un taux de remplissage prédéfini de l'agent de pressurisation et/ou de la pression prédéfinie.

6. Installation de siège (10) selon l'une quelconque des revendications 3 ou 4, **caractérisée en ce que** le dispositif de pompe (30) est disposé à l'intérieur de l'installation de siège (10).

7. Installation de siège (10) selon l'une quelconque des revendications précédentes, **caractérisée en ce que** l'installation de siège (10) comprend deux des rembourrages (18, 26), l'un des rembourrages (18) étant associé à la partie de dossier (12) et l'autre rembourrage (26) à la partie (14) de coussin de siège de l'installation de siège (10).
